# FASCICULE DE BREVET EUROPEEN

(11) **EP 3 276 519 B1**
(45) Date de publication et mention de la délivrance du brevet: **14.09.2022**
(21) Numéro de dépôt: 17182952.6
(22) Date de dépôt: 25.07.2017
(51) Int. Cl.: G06F 21/44, B41M 5/00, G03G 21/18, G06F 21/60

(54) **SYSTEME DE PROTECTION AVANCEE D'ELEMENTS CONSOMMABLES OU DETACHABLES D'IMPRIMANTE INDUSTRIELLE**
FORTGESCHRITTENES SCHUTZSYSTEM VON VERBRAUCHS- ODER ABNEHMBAREN ELEMENTEN EINES INDUSTRIEDRUCKERS
ADVANCED PROTECTION SYSTEM FOR CONSUMABLE OR DETACHABLE ELEMENTS OF AN INDUSTRIAL PRINTER

(30) Priorité: 29.07.2016 FR 1657421
(43) Date de publication de la demande: 31.01.2018
(73) Titulaire: Dover Europe Sàrl, 1214 Vernier (CH)
(72) Inventeur: SOTO, Patrick, 26320 Saint Marcel Les Valence (FR); BONNETON, Damien, 26730 Hostun (FR); SAVRY, Olivier, 38360 Sassenage (FR)
(74) Mandataire: Brevalex

(56) Documents cités:
- EP-A1- 2 863 620
- WO-A1-2012/033489
- US-A1- 2007 222 606
- US-A1- 2010 153 729

## Description

L'invention concerne le domaine des imprimantes industrielles, par exemple à jet d'encre continu (CIJ), à jet d'encre à la demande (ou DOD pour « Drop On Demand ») par exemple du type « valve jet » ou à valve, à transfert thermique, laser, à jet d'encre thermofusible, ou encore de type « print and apply » (réalisant une impression sur un support suivie d'une application du support imprimé sur un produit). Une imprimante est qualifiée d' « industrielle » par opposition à une imprimante de type bureautique qui réalise une impression sur des feuilles de papier ou de carton. Les imprimantes industrielles sont notamment utilisées pour réaliser des impressions de type marquage ou codage, directement ou indirectement, sur des produits nécessitant une traçabilité.

Elle concerne également un dispositif et un procédé pour sécuriser l'utilisation d'une telle imprimante et/ou l'utilisation de pièces détachées, par exemple des filtres ou des pompes, ou de consommables, par exemple de cartouches d'encre ou de solvant, mis en œuvre dans une telle imprimante.

Les imprimantes à jet d'encre continu (CIJ) sont bien connues dans le domaine du codage et du marquage industriel de produits divers, par exemple pour marquer des codes barre, la date de péremption sur des produits alimentaires, ou encore des références ou des repères de distance sur les câbles ou les tuyaux directement sur la chaine de production et à grande cadence. Ce type d'imprimante se trouve également dans certains domaines de la décoration où les possibilités d'impression graphique de la technologie sont exploitées.

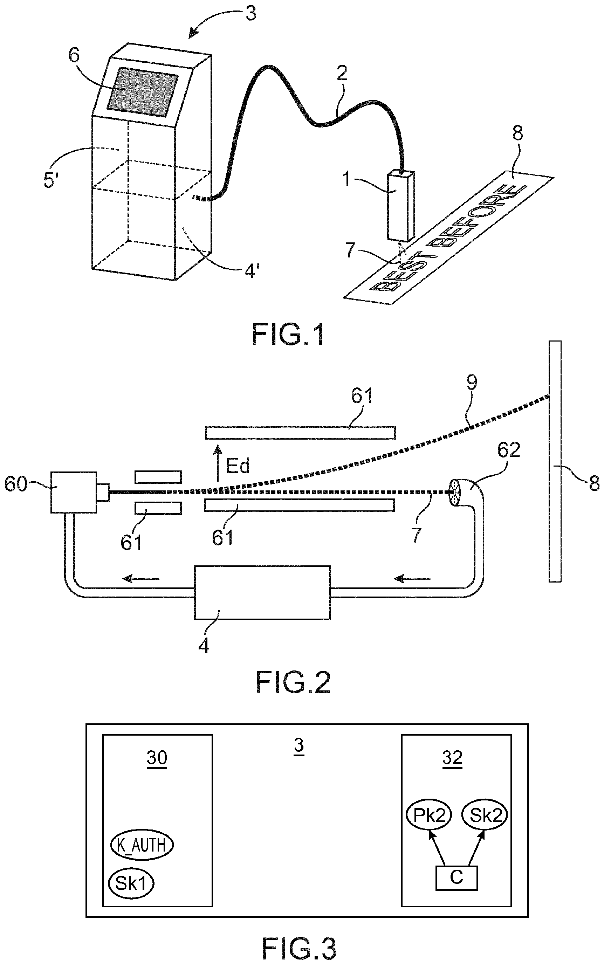

Ces imprimantes possèdent plusieurs sous-ensembles type comme le montre la figure 1.

Tout d'abord, une tête d'impression 1, généralement déportée par rapport au corps de l'imprimante 3, est reliée à celui-ci par un ombilic 2 souple rassemblant les liaisons hydrauliques et électriques nécessaires au fonctionnement de la tête en lui donnant une souplesse qui facilite l'intégration sur la ligne de production.

Le corps de l'imprimante 3 (encore appelé pupitre ou cabinet) contient habituellement trois sous-ensembles :
- un circuit d'encre dans la partie basse du pupitre (zone 4'), qui permet d'une part, de fournir de l'encre à la tête, à une pression stable et d'une qualité adéquate, et d'autre part de prendre en charge l'encre des jets, non utilisée pour l'impression,
- un contrôleur situé dans le haut du pupitre (zone 5'), capable de gérer les séquencements d'actions et de réaliser les traitements permettant l'activation des différentes fonctions du circuit d'encre et de la tête. Le contrôleur peut comporter par exemple un micro-ordinateur ou un micro-processeur et/ou une (ou plusieurs) carte électronique et/ou au moins un logiciel embarqué, dont la programmation assure le pilotage du circuit d'encre et de la tête d'impression 1. Ce contrôleur permet de transmettre les instructions d'impression à la tête 1 mais aussi de piloter les moteurs et les vannes du système afin de gérer l'alimentation du circuit en encre et/ou en solvant ainsi que la récupération du mélange d'encre et d'air depuis la tête. Il est donc programmé à cet effet,
- une interface 6 qui donne à l'opérateur le moyen de mettre l'imprimante en œuvre et d'être informé sur son fonctionnement.

Autrement dit, le cabinet comporte 2 sous-ensembles : en partie haute, l'électronique, l'alimentation électrique et l'interface opérateur, et en partie basse un circuit d'encre fournissant l'encre, de qualité nominale, sous pression à la tête et la dépression de récupération de l'encre non utilisée par la tête.

La figure 2 représente schématiquement une tête 1 d'impression d'une imprimante CIJ. Elle comporte un générateur de gouttes 60 alimenté en encre électriquement conductrice, mise sous pression par le circuit d'encre.

Ce générateur est capable d'émettre au moins un jet continu au travers d'un orifice de petite dimension appelé buse. Le jet est transformé en une succession régulière de gouttes de taille identique sous l'action d'un système de stimulation périodique (non représenté) situé en amont de la sortie de la buse. Lorsque les gouttes 7 ne sont pas destinées à l'impression, elles se dirigent vers une gouttière 62 qui les récupère afin de recycler l'encre non utilisée et de les renvoyer dans le circuit d'encre.

Des dispositifs 61 placés le long du jet (électrodes de charges et de déflexion) permettent, sur commande, de charger électriquement les gouttes et de les défléchir dans un champ électrique Ed. Celles-ci sont alors déviées de leur trajectoire naturelle d'éjection du générateur de gouttes. Les gouttes 9 destinées à l'impression échappent à la gouttière et vont se déposer sur le support à imprimer 8.

Cette description peut s'appliquer aux imprimantes jets continus (CIJ) dites binaires ou jet continu multi-défléchi. Les imprimantes CIJ binaires sont équipées d'une tête dont le générateur de gouttes possède une multitude de jets, chaque goutte d'un jet ne peut être orientée que vers 2 trajectoires : impression ou récupération. Dans les imprimantes à jet continu multi-défléchi, chaque goutte d'un jet unique (ou de quelques jets espacés) peut être défléchie sur diverses trajectoires correspondant à des commandes de charge différentes d'une goutte à l'autre, réalisant ainsi un balayage de la zone à imprimer suivant une direction qui est la direction de déflexion, l'autre direction de balayage de la zone à imprimer est couverte par déplacement relatif de la tête d'impression et du support à imprimer 8. Généralement les éléments sont agencés de telle sorte que ces 2 directions soient sensiblement perpendiculaires.

Un circuit d'encre d'une imprimante à jet d'encre continu permet, d'une part, de fournir de l'encre sous pression régulée, et éventuellement du solvant, au générateur de gouttes de la tête 1 et, d'autre part, de créer une dépression pour récupérer les fluides non-utilisés pour l'impression et qui reviennent ensuite de la tête.

Il permet également la gestion des consommables (distribution d'encre et de solvant à partir d'une réserve) et le contrôle et le maintien de la qualité de l'encre (viscosité/concentration).

Enfin, d'autres fonctions sont liées au confort de l'utilisateur et à la prise en charge automatique de certaines opérations de maintenance afin de garantir un fonctionnement constant quelles que soient les conditions d'utilisation. Parmi ces fonctions, on trouve le rinçage en solvant de la tête (générateur de gouttes, buse, gouttière), l'aide à la maintenance préventive, par exemple le remplacement de composants à durée de vie limité, notamment les filtres, et/ou les pompes.

Ces différentes fonctions ont des finalités et des exigences techniques très différentes. Elles sont activées et séquencées par le contrôleur de l'imprimante qui sera d'autant plus complexe que le nombre et la sophistication des fonctions seront grands.

Les consommables se présentent essentiellement sous la forme de cartouches ou de bouteilles, contenant l'encre ou le solvant adapté au fonctionnement de la machine.

Il existe divers moyens permettant d'identifier une telle cartouche ou bouteille.

On connait des solutions basées sur des moyens d'identification, comme par exemple décrit dans US 6 738 903, mais elles ne permettent pas de réaliser une authentification et d'éviter le clonage ou l'émulation du tag, ou étiquette, mis en œuvre, en particulier dans le cas d'applications non raccordées au réseau.

On connait une autre solution par le document WO 97/28001.

Mais ces solutions ne résolvent pas le problème de pouvoir garantir le caractère authentique du consommable installé afin de pouvoir garantir le comportement de l'imprimante et les performances de l'impression (qualité, résistance,...), la sécurité des données de l'utilisateur ainsi que la sécurité concernant l'utilisation des produits chimiques de l'imprimante. Les demandes de brevets EP2863620 A1, US2010/2153729 A1, US2007222606 A1 et WO2012/033489 proposent des solutions à l'authentification des unités consommables d'imprimante. Cependant, un besoin de sécurisation supplémentaire subsiste.

On peut étendre ce problème à l'authentification de pièces détachées et plus généralement aux éléments détachables des imprimantes ou encore aux logiciels que l'imprimante peut utiliser et/ou aux modes de fonctionnement que l'imprimante peut mettre en œuvre.

Un autre problème est celui de pouvoir configurer une imprimante industrielle de manières diverses, sans réaliser de modification de l'imprimante elle-même. Des configurations différentes, avec des modes d'utilisation différents, peuvent être rendues nécessaires par des besoins techniques différents. Cela peut se traduire notamment par le besoin de faire appel à des microcontrôleurs distincts pour, d'une part, piloter les fonctions relatives à l'impression, et d'autre part réaliser l'authentification et l'identification des éléments consommables ou détachables.

Ces problèmes se posent notamment dans un contexte où les imprimantes ne sont en général pas raccordées à un réseau de communication.

De plus, lorsque l'imprimante est destinée à communiquer avec un ou plusieurs éléments consommables et/ou détachables via plusieurs éléments de transmission de données, tels que des microcontrôleurs, il n'existe actuellement aucune solution assurant la sécurisation de l'ensemble de cette chaîne d'éléments de transmission de données.

### EXPOSÉ DE L'INVENTION

Un but de la présente invention est de proposer une solution adaptée pour une imprimante industrielle destinée à authentifier au moins un élément consommable ou détachable, permettant de sécuriser notamment les transmissions de données entre au moins un 1^{er} microcontrôleur de l'imprimante, et un 2^{ème} microcontrôleur de l'imprimante qui est destiné à communiquer avec l'élément consommable ou détachable ou qui fait partie de cet élément consommable ou détachable.

Pour cela, l'invention propose notamment un procédé d'authentification, par une imprimante industrielle, d'au moins un élément consommable ou détachable selon la revendication 1.

Le procédé selon l'invention propose de réaliser, préalablement à tout échange de données par chiffrement symétrique entre les deux microcontrôleurs, au moins une phase d'authentification du 2^{ème} microcontrôleur par le 1^{er} microcontrôleur. Ainsi, lorsque le 2^{ème} microcontrôleur fait partie de l'imprimante et est distinct du 1^{er} microcontrôleur et de l'élément consommable ou détachable, ce 2^{ème} microcontrôleur qui est destiné à assurer les communications avec l'élément consommable ou détachable est authentifié, ce qui permet de garantir l'envoi et la réception des informations réalisés par le 1^{er} microcontrôleur à travers ce 2^{éme} microcontrôleur.

Ainsi, ce procédé réalise une sécurisation des transmissions de données entre les 1^{er} et 2^{ème} microcontrôleurs.

Le fait que l'étape c) d'échange de données entre les deux microcontrôleurs soit réalisée via un chiffrement symétrique permet de réduire les ressources nécessaires à la sécurisation des transferts de données entre les deux microcontrôleurs, cela étant possible sans en réduire la sécurité grâce à l'authentification préalablement réalisée à l'étape a).

L'utilisation de 2 microcontrôleurs distincts par l'imprimante permet de distinguer les éléments de l'imprimante mettant en œuvre les différentes fonctions de l'imprimante, et permettre ainsi de distinguer le microcontrôleur gérant le pilotage des fonctions d'impression vis-à-vis de celui servant d'interface de communication avec les éléments consommables ou détachables.

En outre, la transmission de la clé secrète de transfert de données entre les deux microcontrôleurs réalisée qui est après l'authentification du deuxième microcontrôleur permet d'éviter le stockage de cette clé secrète dans le deuxième microcontrôleur qui communique avec l'élément consommable ou détachable. Cette transmission de la clé secrète mise en œuvre après authentification améliore la sécurité des échanges.

Un tel procédé est mis en œuvre par une imprimante industrielle et non une imprimante bureautique car d'une part le coût de mise en œuvre d'un tel procédé serait inapproprié pour une imprimante bureautique, et d'autre part une imprimante bureautique n'a pas vocation à fonctionner de manière autonome et est reliée à un ordinateur.

L'étape a) peut comporter au moins la mise en œuvre des étapes suivantes :
- envoi, du 2^{ème} microcontrôleur au 1^{er} microcontrôleur, d'un certificat électronique C et d'une clé publique Pk2 générée à partir dudit certificat électronique C,
- décryptage, avec la clé publique Pk2, d'une signature incluse dans le certificat électronique C et chiffrée par une clé privée Sk2 mémorisée dans le 2^{ème} microcontrôleur,
- génération d'une première donnée aléatoire No par le 1^{er} microcontrôleur et envoi de la première donnée aléatoire No au 2^{ème} microcontrôleur,
- cryptage, par le 2^{ème} microcontrôleur, de la première donnée aléatoire No par la clé privée Sk2 mémorisée dans le 2^{ème} microcontrôleur, et envoi de la première donnée aléatoire cryptée N₂ au 1^{er} microcontrôleur,
- décryptage, par le 1^{er} microcontrôleur, de la première donnée aléatoire cryptée N₂ par la clé publique Pk2, et comparaison de la donnée décryptée N₂⁰avec la première donnée aléatoire No générée par le 1^{er} microcontrôleur.

Dans ce cas, l'authentification du 2^{ème} microcontrôleur par le 1^{er} microcontrôleur fait appel à un cryptage asymétrique garantissant une forte sécurité pour cette authentification.

Lorsque le 2^{ème} microcontrôleur est distinct de l'élément consommable ou détachable, l'étape c) peut comporter l'envoi, du 1^{er} microcontrôleur au 2^{ème} microcontrôleur, d'une clé secrète d'authentification K_AUTH entre le 2^{ème} microcontrôleur et l'élément consommable ou détachable. Cette clé secrète d'authentification entre le 2^{ème} microcontrôleur et l'élément consommable ou détachable provient du 1^{er} microcontrôleur. Cela permet de ne pas avoir à stocker cette clé secrète d'authentification de manière permanente dans le 2^{ème} microcontrôleur, réduisant ainsi les contraintes de sécurité sur ce 2^{ème} microcontrôleur qui peut être plus simple que le 1^{er} microcontrôleur. Le transfert de cette clé secrète d'authentification K_AUTH du 1^{er} microcontrôleur au 2^{ème} microcontrôleur peut être réalisé de manière cryptée par chiffrement symétrique utilisant par exemple la 1^{ère} clé secrète de transfert de données Sk1.

D'autres clés secrètes de transfert de données entre les deux microcontrôleurs peuvent être transmises de manière cryptée grâce à la 1^{ère} clé secrète, par exemple des clés servant aux calculs de codes de type MAC permettant d'authentifier les données échangées.

Le procédé peut comporter en outre une authentification mutuelle du 2^{ème} microcontrôleur et de l'élément consommable ou détachable utilisant la clé secrète d'authentification K_AUTH. La sécurité des échanges entre le 2^{ème} microcontrôleur et l'élément consommable ou détachable est ainsi améliorée d'une part du fait que l'authentification réalisée est mutuelle, et d'autre part du fait que la clé secrète d'authentification utilisée par le 2^{ème} microcontrôleur provient du 1^{er} microcontrôleur. Cette authentification mutuelle peut être réalisée via des codes d'authentification de message, ou codes MAC, calculés à partir de nombres aléatoires et de la clé secrète d'authentification K_AUTH préalablement transférée au 2^{ème} microcontrôleur par le 1^{er} microcontrôleur.

Outre son utilisation pour réaliser l'authentification entre le 2^{ème} microcontrôleur et l'élément consommable ou détachable, la clé secrète d'authentification K_AUTH peut servir à réaliser un ou plusieurs transferts de données entre le 2^{ème} microcontrôleur et l'élément consommable ou détachable, notamment pour réaliser un chiffrement symétrique des données échangées entre le 2^{ème} microcontrôleur et l'élément consommable ou détachable. En variante, afin d'améliorer la sécurité des échanges, une 2^{ème} clé secrète de transfert de données K_TRF, distincte de la clé secrète d'authentification K_AUTH, peut être échangée entre le 2^{ème} microcontrôleur et l'élément consommable ou détachable (par exemple fournie par l'élément consommable ou détachable après authentification mutuelle avec le 2^{ème} microcontrôleur) et être utilisée pour crypter les échanges de données entre le 2^{ème} microcontrôleur et l'élément consommable ou détachable.

Le procédé peut comporter en outre, préalablement à l'étape a), une étape d'authentification du firmware d'au moins l'un des deux microcontrôleurs. Cette authentification peut être réalisée via l'utilisation d'un certificat électronique du microcontrôleur.

Le procédé peut comporter en outre :
- l'envoi, par le 1^{er} microcontrôleur, au 2^{ème} microcontrôleur, d'une requête en écriture et/ou une requête en lecture, dans un circuit de l'élément consommable ou détachable ;
- une authentification, par le 2^{ème} microcontrôleur, de données à écrire envoyées par le 1^{er} microcontrôleur, et/ou une authentification, par le 1^{er} microcontrôleur, de données lues envoyées par le 2^{ème} microcontrôleur.

L'imprimante peut comporter en outre des moyens d'échange de données avec l'élément consommable ou détachable, le procédé d'authentification comportant en outre une authentification des moyens d'échange de données par le 2^{ème} microcontrôleur.

Dans un tel procédé, les moyens d'échange de données de l'imprimante peuvent être de type RFID ou filaire, l'élément consommable ou détachable comportant également des moyens d'échange de données de type RFID ou filaire.

L'élément consommable ou détachable peut être par exemple une cartouche d'encre ou de solvant, ou un filtre, ou une pompe, ou une électrovanne, ou un module amovible, par exemple du circuit d'encre de l'imprimante ou d'une tête d'impression de l'imprimante, ou un support de données, ou un code informatique.

L'imprimante peut être une imprimante de type CIJ, ou DoD, ou à jet d'encre thermique, ou à transfert thermique, ou laser, ou à jet d'encre thermofusible.

L'invention concerne également un dispositif de contrôle d'une imprimante industrielle apte à contrôler l'authenticité d'au moins un élément consommable ou détachable, comportant un 1^{er} microcontrôleur et un 2^{ème} microcontrôleur, programmés pour mettre en œuvre un procédé d'authentification tel que décrit précédemment.

L'invention concerne également une imprimante industrielle, comportant un tel dispositif de contrôle.

### BREVE DESCRIPTION DES FIGURES

- La figure 1 représente une structure connue d'imprimante,
- la figure 2 représente une structure connue d'une tête d'impression d'une imprimante de type CIJ,
- la figure 3 représente schématiquement une structure de dispositif de contrôle d'une imprimante industrielle selon la présente invention,
- la figure 4 représente des étapes d'un procédé d'authentification entre 2 microcontrôleurs, selon un aspect de l'invention,
- les figures 5A et 5B représentent des étapes d'une authentification de requêtes en écriture et en lecture selon un aspect de l'invention,
- la figure 6 représente des détails de réalisation d'une structure de dispositif de contrôle et d'un tag d'un élément consommable ou détachable, selon un aspect de l'invention,
- les figures 7A et 7B représentent des étapes d'authentification d'un élément consommable ou détachable et d'un contrôleur selon un aspect de l'invention.

### EXPOSE DETAILLE D'UN MODE DE REALISATION

Dans la suite, on appelle élément consommable un élément destiné à être renouvelé du fait de la diminution de son contenu ou de sa consommation, en vue de la réalisation d'une fonctionnalité de l'imprimante. Ce peut être aussi un élément pour lequel une autorisation d'utilisation est donnée de manière limitée dans le temps, par exemple un logiciel ou une fonctionnalité logicielle.

On appelle élément détachable un élément qui, pour satisfaire à la mise en œuvre d'une fonctionnalité de l'imprimante, doit lui être relié temporairement, comme par exemple un filtre, une pompe, une électrovanne, un élément amovible pouvant par exemple faire partie du circuit d'encre de l'imprimante ou de la tête d'impression, ou encore un support de données.

On cite souvent, ci-dessous, l'exemple de la cartouche d'encre : elle peut être reliée à l'imprimante pour lui fournir de l'encre. La cartouche est à la fois consommable et détachable. Mais l'invention s'applique également à une pièce détachée, par exemple un filtre, ou une pompe, ou une électrovanne, ou tout autre module ou sous-ensemble de l'imprimante, par exemple un module amovible tel que décrit dans le document WO 2014/154830. Chacun de ces éléments a une durée de vie limitée, à la fin de laquelle il doit être remplacé pour le bon fonctionnement de l'imprimante.

On a représenté, très schématiquement, en figure 3, le contrôleur 3 d'une imprimante, qui peut, selon l'invention, comporter un 1^{er} microprocesseur, de préférence sous la forme d'un microcontrôleur 30, et un 2^{ème} microprocesseur, de préférence sous la forme d'un microcontrôleur 32. On décrit dans la suite une réalisation avec 2 microcontrôleurs, mais elle peut être transposée à une réalisation avec 2 microprocesseurs (ou 1 microprocesseur et 1 microcontrôleur), avec les éléments périphériques adaptés (le ou les microprocesseur(s) étant muni d'au moins une mémoire et de moyens de communication avec au moins un autre circuit de l'imprimante, l'autre microprocesseur ou microcontrôleur en particulier). Chaque microcontrôleur comporte un processeur, une ou plusieurs zones mémoires, au moins une interface d'entrée-sortie, ainsi que des moyens de cryptage - décryptage de données.

De préférence, les différentes clés de cryptage - décryptage décrites ci-dessous ont une taille au moins égale à environ 1024 bits pour les algorithmes asymétriques, et au moins égale à environ 128 bits pour les algorithmes symétriques.

Le 1^{er} microcontrôleur 30 est programmé notamment pour contrôler les opérations d'impression de l'imprimante, et la gestion des fluides (encre et solvant) qui alimentent le réservoir principal et/ou une tête d'impression 1 dans le cas d'une imprimante CIJ (figure 1).

Le 2^{ème} microcontrôleur 32 va permettre un échange d'informations avec au moins une pièce détachée, c'est-à-dire un élément détachable, ou un élément consommable.

Le 1^{er} microcontrôleur 30 mémorise une clé secrète Sk1, stockée lors de la fabrication ou de la préparation du 1^{er} microcontrôleur 30. Le 1^{er} microcontrôleur 30 mémorise également une clé secrète d'authentification K_AUTH qui est destinée à servir, après authentification du 2^{ème} microcontrôleur 32 par le 1^{er} microcontrôleur 30, à réaliser une authentification entre un élément consommable ou détachable et le 2^{ème} microcontrôleur 32.

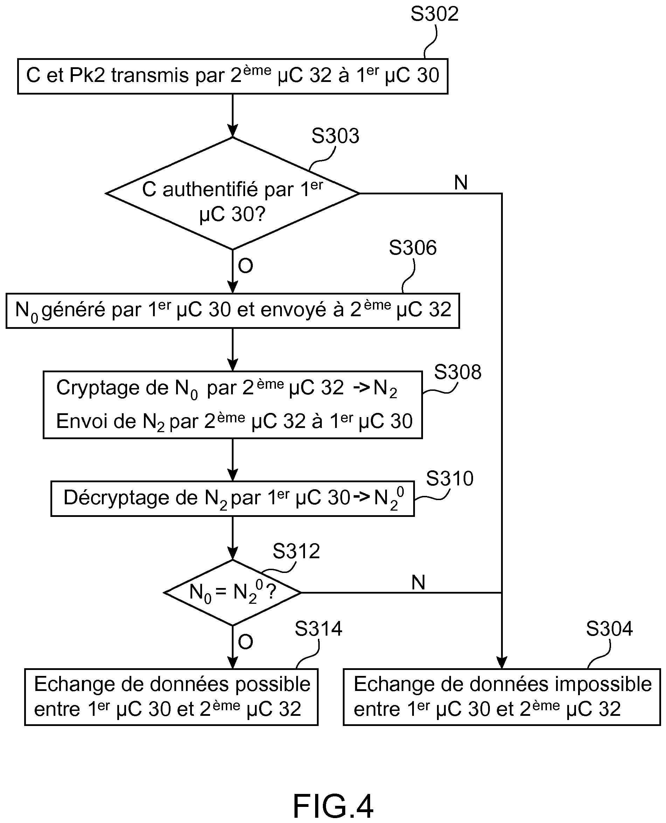

Préalablement au transfert de la clé secrète Sk1 du 1^{er} microcontrôleur 30 au 2^{ème} microcontrôleur 32, une authentification du 2^{ème} microcontrôleur 32 par le 1^{er} microcontrôleur 30 est réalisée. Les étapes mises en œuvre pour réaliser cette authentification sont représentées sur la figure 4.

Le 2^{ème} microcontrôleur 32 mémorise un certificat électronique C, ainsi qu'une clé secrète Sk2 et une clé publique Pk2 générées à partir du certificat électronique C.

Le certificat électronique C et la clé publique Pk2 du 2^{ème} microcontrôleur 32 sont transmis, par le 2^{ème} microcontrôleur 32, au 1^{er} microcontrôleur 30 (étape S 302), qui peut ainsi contrôler l'authenticité du certificat électronique C (étape S 303).

La vérification de l'authenticité du certificat électronique C réalisée à l'étape S 303 correspond par exemple à une vérification d'une signature incluse dans le certificat électronique C. Lors de la fabrication de ce certificat électronique C, cette signature est encryptée avec la clé secrète Sk2. En décryptant cette signature à l'aide de la clé publique Pk2, le 1^{er} microcontrôleur 30 peut ainsi comparer la signature décryptée obtenue avec celle attendue et s'assurer que le 2^{ème} microcontrôleur 32 correspond bien à celui avec lequel il est destiné à échanger des données.

Si l'authenticité du certificat électronique C n'est pas constatée, le processus s'arrête et l'échange de données entre les deux microcontrôleurs 30, 32 n'est pas autorisé (S 304).

Si l'authenticité du certificat électronique C est constatée, une vérification de l'authenticité de la clé publique Pk2 qui a servi à vérifier celle du certificat électronique C est ensuite réalisée afin de confirmer l'authenticité du 2ème microcontrôleur 32. Pour cela, le 1^{er} microcontrôleur 30 peut générer un nombre aléatoire No (S 306), qui est envoyé au 2^{ème} microcontrôleur 32, lequel va l'encrypter avec sa clé secrète Sk2 (S 308). Le nombre encrypté N₂ ainsi obtenu est ensuite transmis au 1^{er} microcontrôleur 30 (S 310), qui le décrypte avec la clé publique Pk2 précédemment transmise par le 2^{ème} microcontrôleur 32 et compare le résultat N₂⁰ du décryptage avec le nombre aléatoire Nogénéré initialement (S 312).

Si les 2 nombres No et N₂° ci-dessus ne sont pas égaux (ou, plus généralement, si il n'est pas satisfait à une relation entre eux), le 1^{er} microcontrôleur 30 n'identifie pas le 2^{ème} microcontrôleur 32 comme authentique, et aucune donnée ne peut être échangée entre eux (S 304).

Si ces 2 nombres sont égaux (ou, plus généralement, s'il est satisfait à une relation entre eux, qui permet de conclure à leur accord ou correspondance), alors le 1^{er} microcontrôleur 30 identifie le 2^{ème} microcontrôleur 32 comme authentique. Des données, par exemple la clé secrète Sk1, peuvent être échangées entre les 2 microcontrôleurs 30, 32 (S 314).

Pour sécuriser le transfert de la clé secrète Sk1 depuis le 1^{er} microcontrôleur 30 vers le 2^{ème} microcontrôleur 32, la clé secrète Sk1 peut être encryptée avec la clé publique Pk2 qui est à disposition du 1^{er} microcontrôleur 30. Le 2^{ème} microcontrôleur 32 la décrypte ensuite avec la clé secrète Sk2.

Une clé secrète K_MAC, différente des clés précédentes, peut ensuite être générée par l'un des microcontrôleurs 30, 32 et être envoyée à l'autre microcontrôleur, par exemple encryptée par la clé Sk1.Cette clé K_MAC est par exemple envoyée du 2^{ème} microcontrôleur 32 au 1^{er} microcontrôleur 30. Le microcontrôleur qui reçoit cette clé la décrypte à l'aide de sa propre clé Sk1.Cette clé K_MAC sera utilisée par la suite pour les échanges entre les 2 microcontrôleurs. Les valeurs des clés secrètes Sk1 et K_MAC peuvent changer régulièrement, par exemple à chaque démarrage du microcontrôleur qui les génère, assurant ainsi une meilleure sécurité pour le transfert des données entre les deux microcontrôleurs 30, 32. Dans l'exemple décrit ici, seule une clé secrète d'authentification K_AUTH a une valeur qui ne change pas et qui est stockée dans le premier microcontrôleur 30 lors de sa programmation.

Enfin, lorsque le 2^{ème} microcontrôleur 32 fait partie de l'imprimante et que l'authentification d'un élément consommable ou détachable est destinée à être réalisée par le 2^{ème} microcontrôleur 32, la clé secrète d'authentification K_AUTH, différente des clés précédentes, est envoyée du 1^{er} microcontrôleur 30 au 2^{ème} microcontrôleur 32, encryptée par la clé Sk1.Cette clé K_AUTH sera utilisée par la suite pour l'authentification entre le 2^{ème} microcontrôleur et un élément consommable ou détachable (ou un circuit associé à ce dernier) dans lequel est également stockée cette clé secrète d'authentification K_AUTH. Pour des raisons de sécurité, cette clé secrète K_AUTH n'est pas stockée dans le firmware du 2^{ème} microcontrôleur 32. La transmission de cette clé depuis le 1^{er} microcontrôleur 30 vers le 2^{ème} microcontrôleur 32 permet de mémoriser cette clé dans une mémoire sécurisée (non lisible depuis l'extérieur) ou temporairement dans la RAM du 2^{ème} microcontrôleur 32. Cette clé K_AUTH peut être considérée comme étant une « Master Key », ou clé maître, les éléments consommables ou détachables disposant de clés pouvant être dérivées de cette Master Key pour améliorer la sécurité des échanges avec ces éléments.

Toutes les communications entre les 2 microcontrôleurs peuvent ensuite avoir lieu en utilisant un algorithme de cryptage symétrique et la clé K_MAC, notamment pour échanger des données techniques d'utilisation (elles vont concerner des aspects ou des fonctionnalités techniques de la machine et/ou des aspects techniques de fonctionnement de la machine) et/ou des demandes de lecture et/ou d'écriture, par exemple dans un circuit associé à un élément consommable ou détachable.

En outre, l'authentification décrite ci-dessus réalisée par les microcontrôleurs 30, 32 peut être mutuelle, c'est-à-dire que le 2^{ème} microcontrôleur 32 peut s'assurer que le 1^{er} microcontrôleur 30 est authentique, et que le 1^{er} microcontrôleur 30 peut s'assurer que le 2^{ème} microcontrôleur 32 est authentique.

Préalablement à ces opérations d'authentification, il peut être procédé, dans l'un ou les deux microcontrôleurs 30, 32, à une vérification du firmware de ces microcontrôleurs 30, 32 grâce à un certificat électronique présent dans chacun des microcontrôleurs 30, 32, par fonction de « hachage». Pour le 2^{ème} microcontrôleur 32, le certificat électronique utilisé pour cette vérification est distinct de celui précédemment utilisé pour l'authentification du 2^{ème} microcontrôleur 32.

Pour la vérification du firmware de l'un des microcontrôleurs 30, 32, une signature est stockée dans la mémoire de ce microcontrôleur. Cette signature est calculée lors de la fabrication du microcontrôleur en appliquant une fonction de hachage au firmware authentique du microcontrôleur, puis en cryptant l'empreinte de hachage obtenue avec une clé secrète générée depuis le certificat stocké dans le microcontrôleur. Lors du démarrage du microcontrôleur, une fonction de hachage similaire à celle utilisée lors de la fabrication du microcontrôleur est appliquée au firmware à vérifier qui est présent dans la mémoire du microcontrôleur. Parallèlement à cela, l'empreinte de hachage cryptée également présente dans la mémoire du microcontrôleur est décryptée en utilisant une clé publique générée par le certificat stocké dans le microcontrôleur. L'empreinte de hachage décryptée et celle obtenue à partir du firmware présent dans la mémoire du microcontrôleur sont ensuite comparées afin de déterminer l'authenticité ou non du firmware présent dans la mémoire du microcontrôleur.

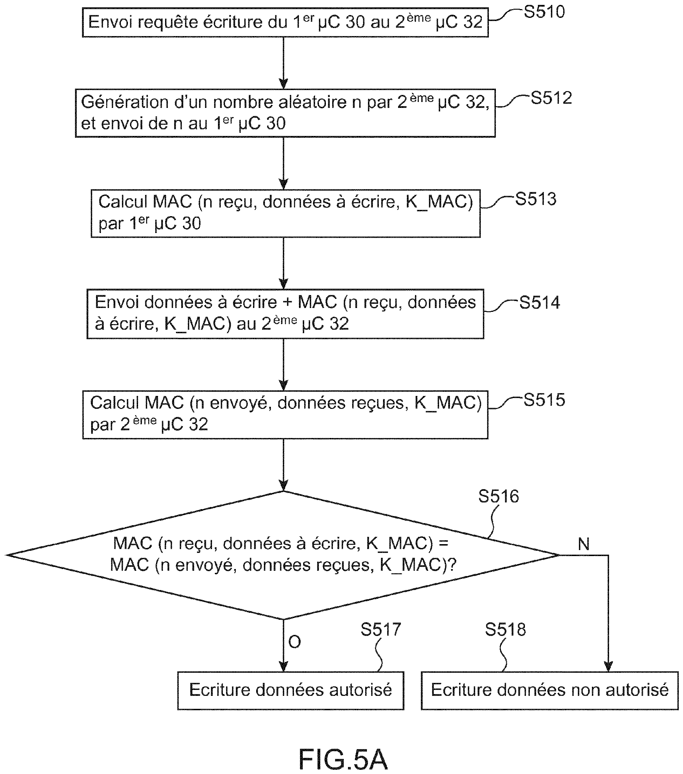

La figure 5A, respectivement 5B, représente une demande d'écriture, respectivement de lecture, par exemple dans un circuit associé à un élément consommable ou détachable. Cette demande est adressée par le 1^{er} microcontrôleur 30 au 2^{ème} microcontrôleur 32.

Plus exactement, une demande d'écriture peut comporter (figure 5A) :
- l'envoi d'une requête en écriture du 1^{er} microcontrôleur 30 au 2^{ème} microcontrôleur 32 (S 510) ;
- la génération d'un nombre n aléatoire par le 2^{ème} microcontrôleur 32 puis son envoi au 1^{er} microcontrôleur 30 (S 512) ;
- le calcul, par le 1^{er} microcontrôleur 30, d'un code d'authentification de message, ou MAC (« Message Authentication Code »), à partir des données à écrire, du nombre aléatoire n reçu et de la clé secrète K_MAC à disposition du 1^{er} microcontrôleur 30 (S 513). Un tel MAC est par exemple calculé par un algorithme de type CBC-MAC utilisant le nombre aléatoire n en tant que vecteur d'initialisation.

- l'envoi de la ou des donnée(s) à écrire (cryptées ou non en utilisant par exemple la clé secrète Sk1), et du MAC calculé au 2^{ème} microcontrôleur 32 (S 514);
- le calcul, par le 2^{ème} microcontrôleur 32, d'un MAC à partir des données à écrire reçues, du nombre aléatoire n généré et de la clé secrète K_MAC à disposition du 2^{ème} microcontrôleur 32 (S 515) ;
- la comparaison, par le 2^{ème} microcontrôleur 32, du MAC envoyé par le 1^{er} microcontrôleur 30 et du MAC généré par le 2^{ème} microcontrôleur 32 (S 516) ;
- si les deux MAC comparés par le 2^{ème} microcontrôleur 32 sont identiques, alors le 2^{ème} microcontrôleur 32 peut considérer les données reçues comme authentiques et peut procéder à l'écriture des données (en les décryptant au préalable si ces données ont été cryptées) dans un circuit associé à l'élément consommable ou détachable (S 517). Sinon, l'écriture des données n'est pas autorisée (S 518).

En complément de cette vérification des données réalisées par le 2^{ème} microcontrôleur 32, il est possible que le 2^{ème} microcontrôleur 32 génère et envoie au 1^{er} microcontrôleur 30 un accusé de réception ainsi qu'un autre MAC calculé à partir des données de l'accusé de réception, du nombre aléatoire n généré et de la clé secrète K_MAC à disposition du 2^{ème} microcontrôleur 32. Une vérification analogue à celle précédemment décrite peut être réalisée par le 1^{er} microcontrôleur 30 via la génération d'un autre MAC, par le 1^{er} microcontrôleur 30, à partir des données de l'accusé de réception reçu, du nombre aléatoire n reçu et de la clé secrète K_MAC à disposition du 1^{er} microcontrôleur 30, et la comparaison de ces deux MAC par le 1^{er} microcontrôleur 30.

L'utilisation des MAC lors des échanges des données à écrire et de l'accusé de réception permet la mise en œuvre d'une fonction « d'anti-replay » sécurisant l'échange des données entre les deux microcontrôleurs 30, 32 du fait que les MAC envoyés sont à chaque fois différents en raison des nombres aléatoires utilisés.

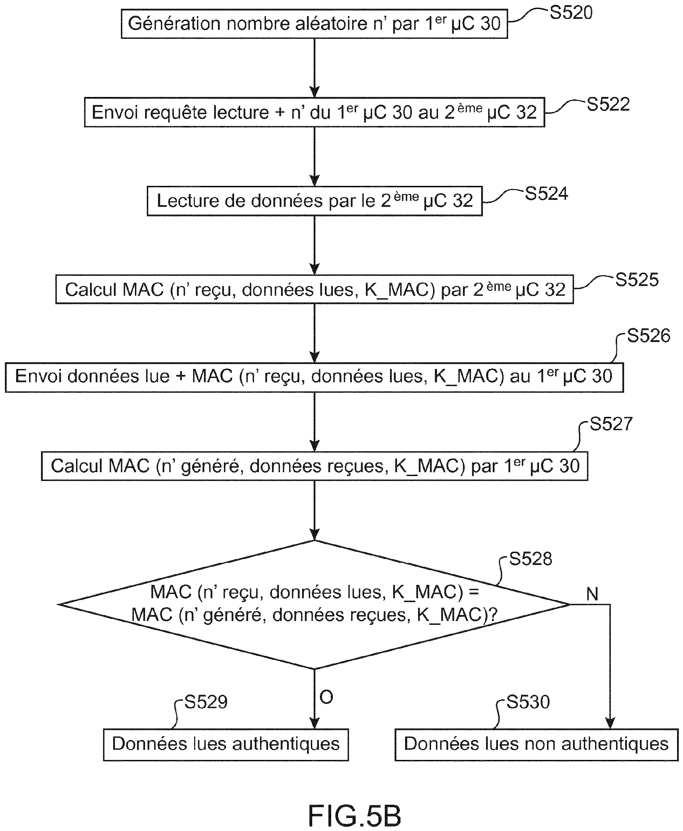

Une demande de lecture peut comporter (figure 5B):
- la génération d'un nombre n' aléatoire par le 1^{er} microcontrôleur 30 (S520) ;
- l'envoi d'une requête en lecture, et du nombre n' aléatoire, du 1^{er} microcontrôleur 30 au 2^{ème} microcontrôleur 32 (S 522) ;
- la lecture de données, par le 2^{ème} microcontrôleur 32, par exemple dans un circuit associé à l'élément consommable ou détachable et par l'intermédiaire de moyens de lecture adaptés (S 524) ;
- le calcul, par le 2^{ème} microcontrôleur 32, d'un MAC à partir des données lues, du nombre aléatoire n' reçu et de la clé secrète K_MAC à disposition du 2^{ème} microcontrôleur 32 (S 525) ;
- l'envoi de la ou des donnée(s) lues (cryptées ou non) et du MAC calculé du 2^{ème} microcontrôleur 32 au 1^{er} microcontrôleur 30 (S 526) ;
- le calcul, par le 1^{er} microcontrôleur 30, d'un MAC à partir des données lues reçues, du nombre aléatoire n' généré et de la clé secrète K_MAC à disposition du 1^{er} microcontrôleur 30 (S 527) ;
- la comparaison, par le 1^{er} microcontrôleur 30, du MAC généré par le 1^{er} microcontrôleur 30 et du MAC envoyé par le 2^{ème} microcontrôleur 32 (S 528) ;
- si les deux MAC comparés par le 1^{er} microcontrôleur 30 sont identiques, alors le 1^{er} microcontrôleur 30 peut considérer les données lues comme authentiques (S 529). Sinon, les données lues ne sont pas considérées comme authentiques (S 530).

En complément de cette vérification des données réalisées par le 1^{er} microcontrôleur 30, il est possible que le 1^{er} microcontrôleur 30 génère et envoie au 2^{ème} microcontrôleur 32 un accusé de réception ainsi qu'un autre MAC calculé à partir des données de l'accusé de réception, du nombre aléatoire n' généré et de la clé secrète K_MAC à disposition du 1^{er} microcontrôleur 30. Une vérification analogue à celle précédemment décrite peut être réalisée par le 2^{ème} microcontrôleur 32 via la génération d'un autre MAC, par le 2^{ème} microcontrôleur 32, à partir des données de l'accusé de réception reçu, du nombre aléatoire n' reçu et de la clé secrète K_MAC à disposition du 2^{ème} microcontrôleur 32, et la comparaison de ces deux MAC par le 2^{ème} microcontrôleur 32.

Le 2^{ème} microcontrôleur 32 peut être équipé de moyens 320 de communication, par exemple de type RFID (ils sont alors appelés « lecteur RFID »), qui vont permettre de dialoguer avec les consommables ou pièces détachées. Ils peuvent être séparés du microcontrôleur 32, auquel cas les échanges avec un circuit (ou « tag ») d'un élément consommable ou détachable auront lieu entre ce dernier et le lecteur RFID 320. Dans ce cas, le lecteur 320 est muni d'un circuit, par exemple un microprocesseur qui va permettre de dialoguer avec le 2^{ème} microcontrôleur 32 et avec le circuit de l'élément consommable ou détachable, lui-même muni de moyens de communication RFID.

En variante, la communication entre le 2^{ème} microcontrôleur 32 de l'imprimante et l'élément consommable ou détachable peut être de type par contact. Dans ce cas, des contacts sont prévus sur chacun des circuits de ces éléments pour assurer la transmission des données entre ces derniers. Selon une autre variante, cette communication peut être filaire.

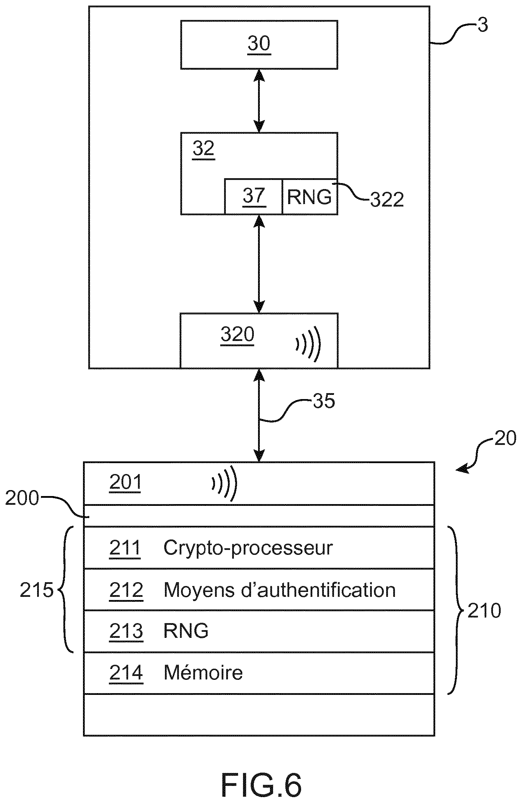

On a représenté, très schématiquement, en figure 6, le contrôleur 3 de l'imprimante, avec ses 2 microcontrôleurs 30, 32, comme expliqué ci-dessus, et un élément consommable ou détachable 20, par exemple une pièce détachée ou une cartouche d'encre ou de solvant.

Le 2^{ème} microcontrôleur 32 est, comme expliqué ci-dessus, en communication avec les moyens 320 de communication, par exemple de type RFID (ou interface RFID), qui vont permettre de dialoguer avec l'élément consommable ou détachable 20. L'élément consommable ou détachable 20 est équipé d'un circuit 200 (par la suite appelé « tag ») qui lui permet de mettre en œuvre des étapes décrites ci-dessous. Ce tag 200 peut être par exemple réalisé sous la forme d'un processeur ou d'un microprocesseur, ou d'un FPGA. Il est par exemple appliqué contre une paroi de l'élément consommable ou détachable 20, de manière à faciliter le dialogue (ou l'échange de données) avec le 2^{ème} microcontrôleur 32 via les moyens 320. En variante, il est possible que le 2^{ème} microcontrôleur 32 corresponde à ces moyens 320, ou que ces moyens 320 fassent partie du 2^{ème} microcontrôleur 32.

Ce tag 200 peut être programmé pour mettre en œuvre un procédé selon l'invention. Des moyens, ou une interface, 201 de communication sont également prévus, par exemple de type RFID, qui vont permettre de dialoguer avec les moyens 320.

Selon un exemple de réalisation, la référence 210 désigne un circuit du tag 200, par exemple réalisé sous la forme d'un microprocesseur, ou d'un FPGA, qui est programmé pour réaliser certaines fonctions, ou étapes de procédé, selon l'invention. Par exemple, ce circuit 210 est muni de moyens d'authentification, désignés globalement par la référence 215 et qui permettront, avec la clé secrète K_AUTH, l'authentification mutuelle entre le consommable et le microcontrôleur 32. Les moyens d'authentification 215 comportent des moyens 213 pour générer une ou des informations, par exemple des nombres, aléatoires, des moyens 212 mettant en œuvre un procédé d'authentification et des moyens 211 de cryptage. Ce circuit peut être muni de moyens 214 de mémorisation, pour mémoriser des données, et en particulier des données pour mettre en œuvre un procédé selon l'invention comme par exemple la clé secrète d'authentification K_AUTH ou ses clés dérivées telles que la clé secrète d'échange de données K_TRF.

Ce circuit 210 va fournir, aux moyens 201, des données à transmettre à l'interface RFID 320, ou à mettre à disposition de ce dernier (par exemple afin qu'il puisse les lire) et/ou il reçoit, via les moyens 320, des données à écrire transmises par les moyens 320.

La référence 35 symbolise les échanges de données entre le contrôleur 3 et le tag 200 de l'élément consommable ou détachable 20. Comme indiqué ci-dessus, il s'agit ici d'un exemple avec un échange de données par mode RFID.

Dans les 2 cas, échange par RFID ou par contact, un évènement va déclencher une 1^{ère} étape de dialogue, qu'il s'agisse de l'authentification ou de l'échange des données. C'est le cas lorsqu'il y a besoin d'utiliser l'élément consommable ou détachable 20, par exemple :
- lors du contrôle au démarrage de l'imprimante, celle-ci détectant la présence de l'élément consommable ou détachable 20, cette détection formant l'évènement ci-dessus,
- ou lors de la connexion de l'élément consommable ou détachable 20, provoquant une détection par le contrôleur 3 qui déclenche alors un procédé selon l'invention,
- ou lorsque le besoin de l'élément consommable ou détachable 20 se manifeste, par exemple lorsqu'un niveau bas de l'encre est détecté dans le réservoir principal, nécessitant de l'approvisionner par la cartouche d'encre.

En figure 6, on a représenté de manière un peu plus détaillée un exemple de réalisation de cette architecture, dans sa version avec des moyens de communication de type RFID.

La référence 32 désigne le 2^{ème} microcontrôleur, programmé pour réaliser certaines fonctions, ou étapes de procédé. Par exemple, ce circuit 32 est muni de moyens 322 pour générer une ou des informations, par exemple des nombres, aléatoires. Ce circuit peut être muni de moyens 37 de mémorisation, pour mémoriser des données, et en particulier des données pour mettre en œuvre un procédé selon l'invention, par exemple des données relatives à différentes clés secrètes, comme expliqué ci-dessus.

Le 2^{ème} microcontrôleur 32 va fournir, aux moyens 320, des données à transmettre à l'élément consommable ou détachable 20 (en fait : au circuit - décrit ci-dessous - associé à l'élément consommable ou détachable 20), et/ou il reçoit, via les moyens 320, des données transmises par le même élément consommable ou détachable 20 (en fait : par le circuit - décrit ci-dessous - associé à l'élément consommable ou détachable 20).

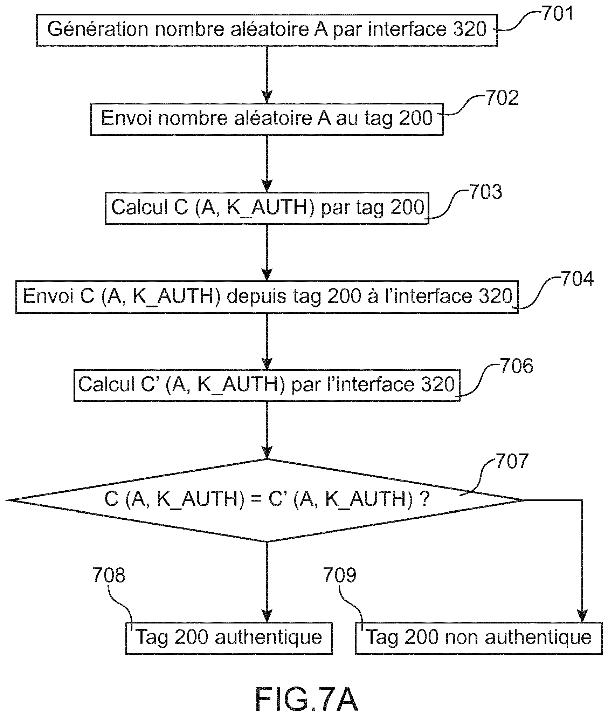

Un exemple d'un procédé, pouvant être mis en œuvre par ce système va être décrit, en liaison avec la figure 7A. Il s'agit d'un algorithme, ou d'un procédé, d'authentification, avant échange de données, entre le tag 200 et l'interface RFID 320, ou plus généralement entre le tag 200 et le 2ème microcontrôleur 32. Dans la description ci-dessous, l'interface RFID 320 met en œuvre différentes étapes de cette authentification.

Selon cet exemple, tant l'interface RFID 320 que le tag 200 de l'élément consommable ou détachable 20 mémorisent et mettent en œuvre une clef secrète d'authentification K_AUTH; un algorithme de cryptage met en œuvre cette clé, les données relatives à cet algorithme étant mémorisées, d'une part dans l'interface RFID 320, d'autre part dans le tag 200.

A la réalisation d'un événement, par exemple l'un de ceux mentionnés ci-dessus, les moyens 320 génèrent un 1^{er} nombre (plus généralement : une information) aléatoire A (étape 701), par exemple de 48 bits, qu'il envoie (étape 702) au tag 200 de l'élément consommable ou détachable 20; celui-ci crypte ce nombre (étape 703) sous la forme d'un MAC à l'aide de son algorithme de cryptage et de la clef K_AUTH mémorisée dans le tag 200 de l'élément consommable ou détachable 20 et renvoie (étape 704) à l'imprimante ce nombre encrypté C(A, K_AUTH) qui comporte par exemple 64 bits.

L'interface RFID 320 réalise la même opération: elle crypte ce même nombre aléatoire A (étape 706) à l'aide de son algorithme de cryptage et de la clef K_AUTH mémorisée dans le 2^{ème} microcontrôleur 32, formant ainsi le MAC C'(A, K_AUTH).

L'interface RFID 320 compare (étape 707) le résultat C'(A, K_AUTH) obtenu par son calcul interne avec celui C(A, K_AUTH) renvoyé par le tag 200.

Si C'(A, K_AUTH) = C(A, K_AUTH) (ou, plus généralement, s'il est satisfait à une relation entre C(A, K_AUTH) et C'(A, K_AUTH), qui permet de conclure à leur accord ou correspondance), alors le tag - et le consommable associé - est authentique (étape 708) et des données, par exemple des données confidentielles contenues dans le tag 200, peuvent être échangées entre ce tag 200 et l'interface RFID 320. Ces données peuvent être qualifiées de données techniques d'utilisation (elles vont concerner des aspects ou des fonctionnalités techniques de la machine et/ou des aspects techniques de fonctionnement de la machine). Sinon, le tag 200, et l'élément consommable ou détachable 20 auquel il est associé, est reconnu comme non authentique (étape 709), et ces données ne peuvent être échangées entre ce tag 200 et l'interface RFID 320.

Plus généralement, lors de la mise en place de la pièce détachée ou avant de prélever un consommable (par exemple un fluide tel que de l'encre ou un solvant) dans une cartouche ou une bouteille, une authentification peut être réalisée de la manière qui vient d'être décrite.

Lors de la mise en œuvre de ce procédé d'authentification, la clé K_AUTH permet le calcul du MAC permettant d'autoriser ou non la transmission d'informations du « tag » 200 vers le contrôleur 3 (en fait : vers l'interface RFID 320), et vice versa.

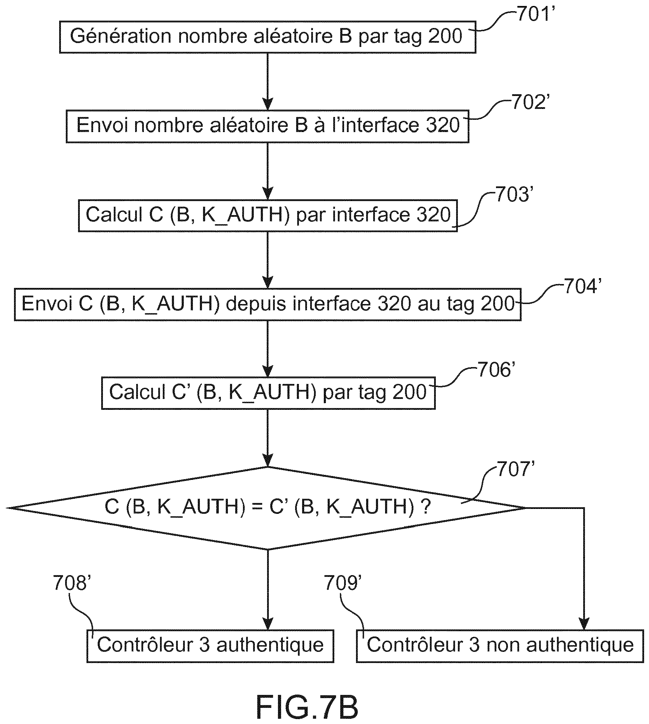

Afin de protéger au mieux les données du tag 200, l'authentification peut être mutuelle et le tag 200 peut à son tour générer un nombre aléatoire qu'il soumet à l'imprimante, selon le procédé de la figure 7B :
- le tag 200 génère un nombre (plus généralement : une information) aléatoire B (étape 701'), par exemple de 48 bits, qu'il envoie (étape 702') à l'interface RFID 320; celle-ci crypte ce nombre (étape 703') sous la forme d'un MAC à l'aide de son algorithme de cryptage et de la clef secrète K_AUTH mémorisée dans le 2^{ème} microcontrôleur 32 et envoie (étape 704') au tag 200 ce nombre crypté C(B, K_AUTH) qui comporte par exemple 64 bits,
- le tag 200 réalise la même opération: il crypte ce même nombre B (étape 706') à l'aide de son algorithme de cryptage et de la clef secrète K_AUTH mémorisée dans le tag 200, formant ainsi le MAC C'(B, K_AUTH),
- le tag 200 compare (étape 707') le résultat C'(B, K_AUTH) obtenu par son calcul interne avec celui C(B, K_AUTH) renvoyé par l' l'interface RFID 320.

Si C'(B, K_AUTH) = C(B, K_AUTH) (ou, plus généralement, si il est satisfait à une relation entre C(B, K_AUTH) et C'(B, K_AUTH), qui permet de conclure à leur accord ou correspondance), alors le tag 200 peut échanger des données avec le contrôleur 3 (étape 708'). Sinon, ce dernier est reconnu comme non authentique ou, plus généralement, non autorisé à échanger des données avec le contrôleur 3 (étape 709'). On peut éventuellement procéder dans l'ordre inverse : on réalise d'abord le procédé décrit ci-dessus en lien avec la figure 7B puis celui décrit ci-dessus en lien avec la figure 7A.

D'une manière générale, dans le cas d'une authentification mutuelle, les 2 authentifications seront de préférence validées (respectivement par le contrôleur 3 ou par l'élément consommable ou détachable 20) pour conclure à un échange possible de données entre l'élément consommable ou détachable 20 et l'imprimante et autoriser un tel échange, et par suite l'utilisation de l'élément consommable ou détachable 20. De plus, dans le cas d'une authentification mutuelle, les étapes mises en œuvre peuvent être :
- les moyens 320 génèrent un 1^{er} nombre aléatoire A qu'ils envoient au tag 200 de l'élément consommable ou détachable 20;
- le tag 200 de l'élément consommable ou détachable 20 génère un 2^{ème} nombre aléatoire B qu'il envoie aux moyens 320 ;
- les moyens 320 génèrent un MAC à partir des nombres aléatoires A et B et de la clé secrète K_AUTH mémorisée dans le 2^{ème} microcontrôleur 32, et envoient ce MAC au tag 200 ;
- le tag 200 génère un MAC à partir des nombres aléatoires A et B et de la clé secrète K_AUTH mémorisée dans le tag 200, et compare ce MAC avec celui envoyé par les moyens 320. Le résultat de cette comparaison permet au tag 200 d'authentifier ou non les moyens 320. Le MAC généré par le tag 200 est également envoyé aux moyens 320 ;
- les moyens 320 comparent le MAC généré avec le MAC envoyé par le tag 200. Le résultat de cette comparaison permet aux moyens 320 d'authentifier ou non le tag 200.

Le procédé décrit ci-dessus permet de garantir l'aspect authentique du consommable et/ou d'une pièce détachée et l'inviolabilité des données stockées dans ce tag. Ainsi, cette authentification de l'élément consommable ou détachable 20 garantie que l'identifiant, ou toute autre information, transmis par cet élément consommable ou détachable 20 est authentique.

L'algorithme décrit ci-dessus pour réaliser l'authentification entre l'élément consommable ou détachable 20 et le contrôleur 3 de l'imprimante correspond à un exemple d'algorithme possible parmi d'autres. D'autres algorithmes d'authentification mutuelle sont possibles, par exemple utilisant plusieurs variables aléatoires ou fonctions.

De plus, l'utilisation de nombres aléatoires pour générer les MAC assure un renouvellement des MAC, augmentant ainsi la sécurité au sein du système.

L'algorithme ou le procédé exposé ci-dessus peut être mis en œuvre, par l'imprimante, à l'aide de son contrôleur, programmé à cet effet, et par le tag, également programmé à cet effet.

Un algorithme ou un procédé identique ou similaire à celui exposé ci-dessus peut être mis en œuvre entre le deuxième microcontrôleur 32 et l'interface RFID 320. Autrement dit, on peut procéder à une authentification de l'interface RFID 320 par le deuxième microcontrôleur 32. Et cette authentification peut être mutuelle, par exemple selon le même schéma que ce qui est décrit ci-dessus en lien avec les figures 7A et 7B.

Lors d'un processus d'échange de données entre imprimante (contrôleur) et tag 200, des données peuvent être envoyées de l'imprimante (ou du contrôleur), au tag 200, ces données ayant été cryptées à l'aide de la clé K_AUTH, ou bien à l'aide de la clé partagée K_TRF. Des données envoyées par le tag 200 au contrôleur 3 sont lues (décryptées) par ce dernier, également à l'aide de la clé partagée. La clé partagée K_TRF est également utilisée dans le tag 200 pour envoyer des données au contrôleur 3 ou pour lire ou écrire les données envoyées par le contrôleur 3.

Selon une réalisation avantageuse, la clé partagée, ou clé de transfert de données, K_TRF est une clé différente de la clé secrète d'authentification K_AUTH. Dans ce cas, il est possible que cette clé partagée K_TRF soit plus facilement décodable que la clé d'authentification K_AUTH. La clé partagée K_TRF sert principalement, voire uniquement, au cryptage des informations stockées dans la mémoire. La clé d'authentification K_AUTH sert principalement, voire uniquement, à l'authentification de l'élément consommable ou détachable par le contrôleur de l'imprimante ou à l'authentification mutuelle, ou réciproque, de l'élément consommable ou détachable et du contrôleur. Cela permet de limiter les risques de piratage des données contenues dans le tag et dans l'élément consommable ou détachable associé.

La clé partagée K_TRF peut être par exemple :
- déterminée ou choisie par le fabriquant du contrôleur 3, par exemple lors de la fabrication de celui-ci ; éventuellement, cette clé partagée K_TRF peut être variable dans le temps, par exemple périodiquement, le contrôleur pouvant alors avoir la liste des clés ou l'algorithme permettant de retrouver, à l'instant souhaité, la clé partagée à utiliser;
- fournie par l'élément consommable ou détachable au contrôleur, seulement après que l'authentification entre eux ait été validée ;
- une clé dérivée de la clé secrète d'authentification K_AUTH.

Dans les exemples de réalisation décrits ci-dessus, l'identification et l'authentification sont réalisées pour une transmission d'informations dans une chaîne d'éléments de transmission formée d'au moins 3 éléments : le 1^{er} microcontrôleur 30, le 2^{ème} microcontrôleur 32 et l'élément consommable ou détachable 20.

En variante, lorsque le 2^{ème} microcontrôleur 32 fait partie de l'élément consommable ou détachable 20, ce procédé d'identification et d'authentification peut être mis en œuvre dans une chaîne formée de 2 éléments : le 1^{er} microcontrôleur 30 et l'ensemble formé du 2^{ème} microcontrôleur 32 et de l'élément consommable ou détachable 20. Dans ce cas, l'identification et l'authentification décrite ci-dessus entre les 2 microcontrôleurs réalise l'identification et l'authentification entre le 1^{er} microcontrôleur 30 et l'élément consommable ou détachable 20.

Un circuit d'encre d'une imprimante à jet d'encre, avec ses éventuelles cartouches d'encre et de solvant, est décrit par exemple dans le document WO 2014/154830 ou WO 2009/047510.

Rappelons que le circuit d'encre réalise principalement les fonctions suivantes :
^{∗} fourniture d'encre de qualité adéquate sous pression au générateur de gouttes de la tête 1,
^{∗} récupération et recyclage des fluides non utilisés pour imprimer en retour de la gouttière de la tête 1,
^{∗} aspiration pour la purge du générateur de gouttes situé dans la tête 1,
^{∗} fourniture de solvant à la tête 1 pour le rinçage effectué pendant les opérations de maintenance de la tête.

L'une et/ou l'autre des cartouches de ce circuit peut être munie d'un tag selon la présente invention. Un contrôleur de l'imprimante peut être du type décrit ci-dessus.

L'invention peut être mise en œuvre dans une imprimante à jet d'encre continu (CIJ) telle que celle décrite ci-dessus en liaison avec les figures 1 et 2. Celle-ci comporte notamment une tête d'impression 1, généralement déportée par rapport au corps de l'imprimante 3, et reliée à celui-ci par des moyens, par exemple sous forme d'un ombilic 2 souple, rassemblant les liaisons hydrauliques et électriques permettant le fonctionnement de la tête.

L'invention peut être avantageusement appliquée à une imprimante qui n'est pas reliée à un réseau de communication tel qu'internet.

## Revendications

1. Procédé d'authentification, par une imprimante industrielle, d'au moins un élément consommable ou détachable (20), l'imprimante comportant un 1^{er} microcontrôleur (30) destiné à gérer le pilotage des fonctions d'impression de l'imprimante et à réaliser un transfert de données avec un 2^{ème} microcontrôleur (32) de l'imprimante destiné à servir d'interface de communication avec l'élément consommable ou détachable (20), ce procédé comportant au moins :
a) une authentification du 2^{ème} microcontrôleur (32) par le 1^{er} microcontrôleur (30), puis, après cette authentification,
b) un envoi, par l'un des microcontrôleurs (30) à l'autre microcontrôleur (32), d'au moins une première clé secrète de transfert de données Sk1 entre les deux microcontrôleurs (30, 32), puis
c) un échange de données entre les deux microcontrôleurs (30, 32) par chiffrement symétrique utilisant la première clé secrète de transfert de données Sk1,
et comportant en outre une authentification de l'élément consommable ou détachable (20) par le 2^{ème} microcontrôleur (32) en utilisant une clé secrète d'authentification K_AUTH stockée dans l'imprimante et dans l'élément consommable ou détachable (20).

2. Procédé selon la revendication 1, dans lequel l'étape a) comporte au moins la mise en œuvre des étapes suivantes :
- envoi (S 302), du 2^{ème} microcontrôleur (32) au 1^{er} microcontrôleur (30), d'un certificat électronique C et d'une clé publique Pk2 générée à partir dudit certificat électronique C,
- décryptage (S 303), avec la clé publique Pk2, d'une signature incluse dans le certificat électronique C et chiffrée par une clé privée Sk2 mémorisée dans le 2^{ème} microcontrôleur (32),
- génération (S 306) d'une première donnée aléatoire N₀ par le 1^{er} microcontrôleur (30) et envoi de la première donnée aléatoire N₀ au 2^{ème} microcontrôleur (32),
- cryptage (S 308), par le 2^{ème} microcontrôleur (32), de la première donnée aléatoire N₀ par la clé privée Sk2 mémorisée dans le 2^{ème} microcontrôleur (32), et envoi de la première donnée aléatoire cryptée N₂ au 1^{er} microcontrôleur (30),
- décryptage (S 310), par le 1^{er} microcontrôleur (30), de la première donnée aléatoire cryptée N₂ par la clé publique Pk2, et comparaison de la donnée décryptée N₂⁰avec la première donnée aléatoire N₀ générée par le 1^{er} microcontrôleur (30).

3. Procédé selon l'une des revendications précédentes, dans lequel l'étape c) comporte l'envoi, du 1^{er} microcontrôleur (30) au 2^{ème} microcontrôleur (32), de la clé secrète d'authentification K_AUTH entre le 2^{ème} microcontrôleur (32) et l'élément consommable ou détachable (20).

4. Procédé selon l'une des revendications précédentes, dans lequel l'authentification entre le 2^{ème} microcontrôleur (32) et de l'élément consommable ou détachable (20) utilisant la clé secrète d'authentification K_AUTH est mutuelle.

5. Procédé selon l'une des revendications précédentes, dans lequel l'étape a) comporte en outre une authentification du 1^{er} microcontrôleur (30) par le 2^{ème} microcontrôleur (32).

6. Procédé selon l'une des revendications précédentes, comportant en outre, préalablement à l'étape a), une étape d'authentification du firmware d'au moins l'un des deux microcontrôleurs (30, 32).

7. Procédé selon l'une des revendications précédentes, comportant en outre :
- l'envoi, par le 1^{er} microcontrôleur (30), au 2^{ème} microcontrôleur (32), d'une requête en écriture et/ou une requête en lecture, dans un circuit de l'élément consommable ou détachable (20) ;
- une authentification, par le 2^{ème} microcontrôleur (32), de données à écrire envoyées par le 1^{er} microcontrôleur (30), et/ou une authentification, par le 1^{er} microcontrôleur (30), de données lues envoyées par le 2^{ème} microcontrôleur (32).

8. Procédé selon l'une des revendications précédentes, l'imprimante comportant en outre des moyens (320) d'échange de données avec l'élément consommable ou détachable (20), le procédé d'authentification comportant en outre une authentification des moyens (320) d'échange de données par le 2^{ème} microcontrôleur (32).

9. Procédé selon la revendication 8, les moyens (320) d'échange de données étant de type RFID, l'élément consommable ou détachable (20) comportant également des moyens (201) d'échange de données de type RFID.

10. Procédé selon l'une des revendications précédentes, dans lequel ledit élément consommable ou détachable (20) est une cartouche d'encre ou de solvant ou un filtre, ou une pompe, ou une électrovanne, ou un module amovible, par exemple du circuit d'encre de l'imprimante ou d'une tête d'impression de l'imprimante, ou un support de données, ou un code informatique.

11. Dispositif de contrôle (3) d'une imprimante industrielle apte à contrôler l'authenticité d'au moins un élément consommable ou détachable (20), comportant un 1^{er} microcontrôleur (30) et un 2^{ème} microcontrôleur (32), programmés pour mettre en œuvre un procédé d'authentification selon l'une des revendications 1 à 10.

12. Imprimante industrielle comportant un dispositif de contrôle (3) selon la revendication 11.

## Patentansprüche

1. Verfahren zur Authentifizierung, durch einen Industriedrucker, mindestens eines Verbrauchs- oder abnehmbaren Elements (20), wobei der Drucker eine erste Mikrosteuerung (30) umfasst, die dazu vorgesehen ist, die Vorsteuerung der Druckfunktionen des Druckers zu verwalten und eine Datenübertragung mit einer zweiten Mikrosteuerung (32) des Druckers durchzuführen, die dazu vorgesehen ist, als Kommunikationsschnittstelle zu dem Verbrauchs- oder abnehmbaren Element (20) zu dienen, wobei dieses Verfahren mindestens Folgendes umfasst:
a) eine Authentifizierung der zweiten Mikrosteuerung (32) durch die erste Mikrosteuerung (30), dann, nach dieser Authentifizierung,
b) eine Sendung, durch eine der Mikrosteuerungen (30) an die andere Mikrosteuerung (32), mindestens eines ersten geheimen Datenübertragungsschlüssels Sk1 zwischen den zwei Mikrosteuerungen (30, 32), dann
c) einen Datenaustausch zwischen den zwei Mikrosteuerungen (30, 32) durch symmetrische Chiffrierung unter Verwendung des ersten geheimen Datenübertragungsschlüssels Sk1,
und weiter umfassend eine Authentifizierung des Verbrauchs- oder abnehmbaren Elements durch die zweite Mikrosteuerung (32) unter Verwendung eines geheimen Authentifizierungsschlüssels K_AUTH, der im Drucker und im Verbrauchs- oder abnehmbaren Element (20) gespeichert ist.

2. Verfahren nach Anspruch 1, wobei der Schritt a) mindestens die Durchführung der folgenden Schritte umfasst:
- Sendung (S302), von der zweiten Mikrosteuerungen (32) an die erste Mikrosteuerung (30), eines elektronischen Zertifikats C und eines öffentlichen Schlüssels Pk2, der ausgehend von dem elektronischen Zertifikat C erzeugt wird,
- Entschlüsselung (S303), mit dem öffentlichen Schlüssel Pk2, einer Signatur, die im elektronischen Zertifikat C enthalten ist und durch einen privaten Schlüssel Sk2, der in der zweiten Mikrosteuerung (32) gespeichert ist, verschlüsselt wurde,
- Erzeugung (S306) einer ersten Zufallsangabe No durch die erste Mikrosteuerung (30) und Sendung der ersten Zufallsangabe No an die zweite Mikrosteuerung (32),
- Verschlüsselung (S308), durch die zweite Mikrosteuerung (32), der ersten Zufallsangabe N₀ durch den privaten Schlüssel Sk2, der in der zweiten Mikrosteuerung (32) gespeichert ist, und Sendung der verschlüsselten ersten Zufallsangabe N₂ an die erste Mikrosteuerung,
- Entschlüsselung (S301), durch die erste Mikrosteuerung (30), der verschlüsselten ersten Zufallsangabe N₂ durch den öffentlichen Schlüssel Pk2 und Vergleich der entschlüsselten Angabe N² mit der ersten Zufallsangabe No, die durch die erste Mikrosteuerung (30) erzeugt wurde.

3. Verfahren nach einem der vorstehenden Ansprüche, wobei der Schritt c) die Sendung, von der ersten Mikrosteuerung (30) an die zweite Mikrosteuerung (32), des geheimen Authentifizierungsschlüssels K_AUTH zwischen der zweiten Mikrosteuerung (32) und dem Verbrauchs- oder abnehmbaren Element (20) umfasst.

4. Verfahren nach einem der vorstehenden Ansprüche, wobei die Authentifizierung zwischen der zweiten Mikrosteuerung (32) und dem Verbrauchs- oder abnehmbaren Element (20) unter Verwendung des geheimen Authentifizierungsschlüssels K_AUTH wechselseitig ist.

5. Verfahren nach einem der vorstehenden Ansprüche, wobei der Schritt a) weiter eine Authentifizierung der ersten Mikrosteuerung (30) durch die zweite Mikrosteuerung (32) umfasst.

6. Verfahren nach einem der vorstehenden Ansprüche, weiter umfassend, vor dem Schritt a), einen Schritt der Authentifizierung der Firmware mindestens einer ersten zwei Mikrosteuerungen (30, 32).

7. Verfahren nach einem der vorstehenden Ansprüche, weiter umfassend:
- die Sendung, durch die erste Mikrosteuerung (30), an die zweite Mikrosteuerung (32), einer Schreibanfrage und/oder einer Leseanfrage, in einer Schaltung des Verbrauchs- oder abnehmbaren Elements (20);
- eine Authentifizierung, durch die zweite Mikrosteuerung (32), von zu schreibenden Angaben, die durch die erste Mikrosteuerung (30) gesendet wurden, und/oder eine Authentifizierung, durch die erste Mikrosteuerung (30), von gelesenen Angaben, die durch die zweite Mikrosteuerung (32) gesendet wurden.

8. Verfahren nach einem der vorstehenden Ansprüche, wobei der Drucker weiter Mittel (320) zum Austausch von Daten mit dem Verbrauchs- oder abnehmbaren Element (20) umfasst, wobei das Authentifizierungsverfahren weiter eine Authentifizierung der Mittel (320) zum Austausch von Daten durch die zweite Mikrosteuerung (32) umfasst.

9. Verfahren nach Anspruch 8, wobei die Mittel (320) zum Austausch von Daten vom RFID-Typ sind, wobei das Verbrauchs- oder abnehmbare Element (20) ebenfalls Mittel (201) zum Austausch von Daten vom RFID-Typ umfasst.

10. Verfahren nach einem der vorstehenden Ansprüche, wobei das Verbrauchs- oder abnehmbare Element (20) eine Tinten- oder Lösemittelpatrone oder ein Filter oder eine Pumpe oder ein Magnetventil oder ein herausnehmbares Modul, zum Beispiel der Tintenversorgung des Druckers oder eines Druckkopfs des Druckers, oder ein Datenträger oder ein Computercode ist.

11. Vorrichtung zur Steuerung (3) eines Industriedruckers, der imstande ist, die Authentizität mindestens eines Verbrauchs- oder abnehmbaren Elements (20) zu steuern, umfassend eine erste Mikrosteuerung (30) und eine zweite Mikrosteuerung (32), die programmiert sind, um ein Authentifizierungsverfahren nach einem der Ansprüche 1 bis 10 durchzuführen.

12. Industriedrucker, umfassend eine Steuerungsvorrichtung (3) nach Anspruch 11.

## Claims

1. Authentication method, by an industrial printer, of at least one consumable or detachable element (20), the printer comprising a 1^{st} microcontroller (30) intended to manage the controlling of the printing functions of the printer and to perform a data transfer with a 2^{nd} microcontroller (32) of the printer intended to be used as a communication interface with the consumable or detachable element (20), this method comprising at least:
a) one authentication of the 2^{nd} microcontroller (32) by the 1^{st} microcontroller (30), then, after this authentication,
b) a sending, by one of the microcontrollers (30) to another microcontroller (32), of at least one first data transfer secret key Sk1 between the two microcontrollers (30, 32), then
c) a data exchange between the two microcontrollers (30, 32) by symmetric encryption using the first data transfer secret key Sk1,
and further comprising an authentication of the consumable or detachable element (20) by the 2^{nd} microcontroller (32) by using a secret authentication key K_AUTH stored in the printer and in the consumable or detachable element (20).

2. Method according to claim 1, wherein the step a) comprises at least the implementation of the following steps:
- sending (S 302) of the 2^{nd} microcontroller (32) to the 1^{st} microcontroller (30), of an electronic certificate C and a public key Pk2 generated from said electronic certificate C,
- decrypting (S 303), with the public key Pk2, of a signature included in the electronic certificate C and encrypted by a private key Sk2 memorised in the 2^{nd} microcontroller (32),
- generating (S 306) of a first piece of random data N₀ by the 1^{st} microcontroller (30), and sending of the first piece of random data N₀ to the 2^{nd} microcontroller (32),
- encrypting (S 308) by the 2^{nd} microcontroller (32), of the first piece of random data N₀ by the private key Sk2 memorised in the 2^{nd} microcontroller (32), and sending the first encrypted piece of random data N₂ to the 1^{st} microcontroller (30),
- decrypting (S 310), by the 1^{st} microcontroller (30), of the first encrypted piece of random data N₂ by the public key Pk2, and comparing of the decrypted data N₂ ° with the first piece of random data N₀ generated by the 1^{st} microcontroller (30).

3. Method according to one of the preceding claims, wherein the step c) comprises the sending, of the 1^{st} microcontroller (30) to the 2^{nd} microcontroller (32), of the secret authentication key K_AUTH between the 2^{nd} microcontroller (32) and the consumable or detachable element (20).

4. Method according to one of the preceding claims, wherein the authentication between the 2^{nd} microcontroller (32) and the consumable or detachable element (20) using the secret authentication key K_AUTH is mutual.

5. Method according to one of the preceding claims, wherein step a) further comprises an authentication of the 1^{st} microcontroller (30) by the 2^{nd} microcontroller (32).

6. Method according to one of the preceding claims, further comprising, prior to step a), a step of authenticating the firmware of at least one of the two microcontrollers (30, 32).

7. Method according to one of the preceding claims, further comprising:
- the sending, by the 1^{st} microcontroller (30), to the 2nd microcontroller (32), of a writing request and/or a reading request, in a circuit of the consumable or detachable element (20);
- an authentication, by the 2^{nd} microcontroller (32), of data to be written sent by the 1^{st} microcontroller (30), and/or an authentication, by the 1^{st} microcontroller (30), of read data sent by the 2^{nd} microcontroller (32).

8. Method according to one of the preceding claims, the printer further comprising means (320) for exchanging data with the consumable or detachable element (20), the authentication method further comprising an authentication of the data exchange means (320) by the 2^{nd} microcontroller (32).

9. Method according to claim 8, the data exchange means (320) being of the RFID type, the consumable or detachable element (20) also comprising RFID-type data exchange means (201).

10. Method according to one of the preceding claims, wherein said consumable or detachable element (20) is an ink cartridge or solvent or a filter, or a pump, or a solenoid valve, or a removable module, for example the ink circuit of the printer or a printing head of the printer, or a data medium, or a computer code.

11. Device for controlling (3) an industrial printer, capable of controlling the authenticity of at least one consumable or detachable element (20), comprising a 1^{st} microcontroller (30) and a 2^{nd} microcontroller (32), programmed to implement an authentication method according to one of claims 1 to 10.

12. Industrial printer comprising a control device (3) according to claim 11.
